# EUROPEAN PATENT APPLICATION

(11) **EP 1 542 491 A2**
(43) Date of publication of application: **15.06.2005**
(21) Application number: 04029361.5
(22) Date of filing: 10.12.2004
(51) Int. Cl.: H04Q 7/38

(54) **Location registration system and method for a mobile communication network**

(30) Priority: 12.12.2003 KR 2003090782
(71) Applicant: LG ELECTRONICS INC., Seoul (KR)
(72) Inventor: Chung, Dae-Woo, Geumcheon-Gu Seoul (KR)
(74) Representative: von Hellfeld, Axel, Dr. Dipl.-Phys.

(57) **Abstract**

A system and method for a location registration system for a mobile terminal is disclosed. The system comprising a mobile switching center for managing a location registration of the mobile terminal in a cluster group comprising a plurality of clusters, wherein each cluster of the plurality of the clusters has at least one cell defining an area for determining the location of the mobile terminal. A plurality of sub-mobile switching centers for managing the location registration of the mobile terminal, wherein each sub-mobile switching center is associated with at least one cluster.

## Description

### BACKGROUND OF THE INVENTION

### Field of the Invention

The present invention relates to a mobile communication system, and more particularly to a method and system for location registration of a mobile terminal within a mobile communication system.

### Description of the Related Art

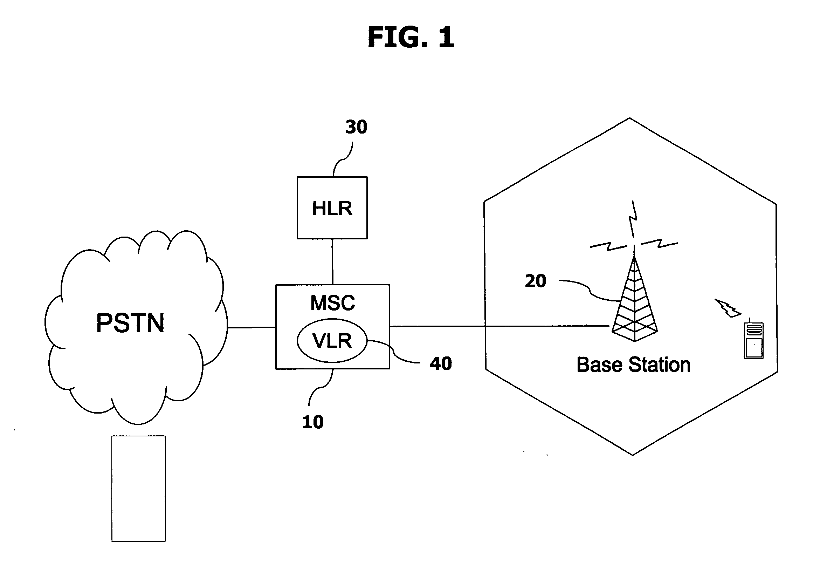

Referring to Fig. 1, a mobile communication network as shown comprises a mobile switching center (MSC) 10, a visitor location register (VLR) 40, a home location register (HLR) 30, and a base station (BS) 20. The MSC 10 provides an exchange function and serves as a cross road for communication lines. The exchange function involves performing operations such as matching of a voice or non-voice speech path with a billing center and/or a short message center (SMC).

The MSC 10 provides further an access switching subsystem (ASS), an interconnection network subsystem (INS) and a central control subsystem (CCS). The ASS processes calls that are distributed across the MSC 10. The INS handles a function of processing a centralized call, and a function of storing and managing information of a mobile subscriber. The CSS performs an operation and maintenance function.

The BS 20 receives a call from the MSC 10 and transmits wirelessly the received call. The HLR 30 is a database comprising key subscriber information such as mobile subscriber personal information, type of subscription service, or type of mobile terminal. The HLR 30, for example, may be a unit such as a hard disk of a computer. The VLR 40 is a database temporarily storing the key subscriber information to reduce wait time for a mobile terminal and for updating the HLR 30. The VLR 40 is a unit, for example, like a random access memory (RAM).

A mobile terminal, unlike a fixed line terminal, requires frequent monitoring to determine its location. A location registration system monitors the movements of a mobile terminal operated by a subscriber. A mobile terminal, for example, is assigned to a cluster. When a mobile terminal moves along a boundary area of a cluster, a location registration of the mobile terminal is frequently updated. The process of updating the location registration of the mobile terminal causes overload of base station resources positioned along a boundary area of a cluster.

Under specialized circumstances, conventional methods reduce an overload of base stations positioned in high traffic or congested cell areas. For example, a fixed location registration method performs location registration when a mobile terminal is moved to a pre-determined cell. A dynamic location registration method uses mobile terminal parameters such as distance, mobility, and time to relocate subscribers to adjoining underutilized cells. A forward pointer location registration method traces a path of a subscriber during a paging process utilizing location information of base stations. A group location registration method groups multiple cells into one cluster and reduces mobile terminal traffic by redistributing subscribers from overloaded cells to neighboring underutilized cells. An overlapping location registration method reduces mobile terminal traffic by transferring a subscriber from high concentration cells to low concentration cells of an adjacent cell area.

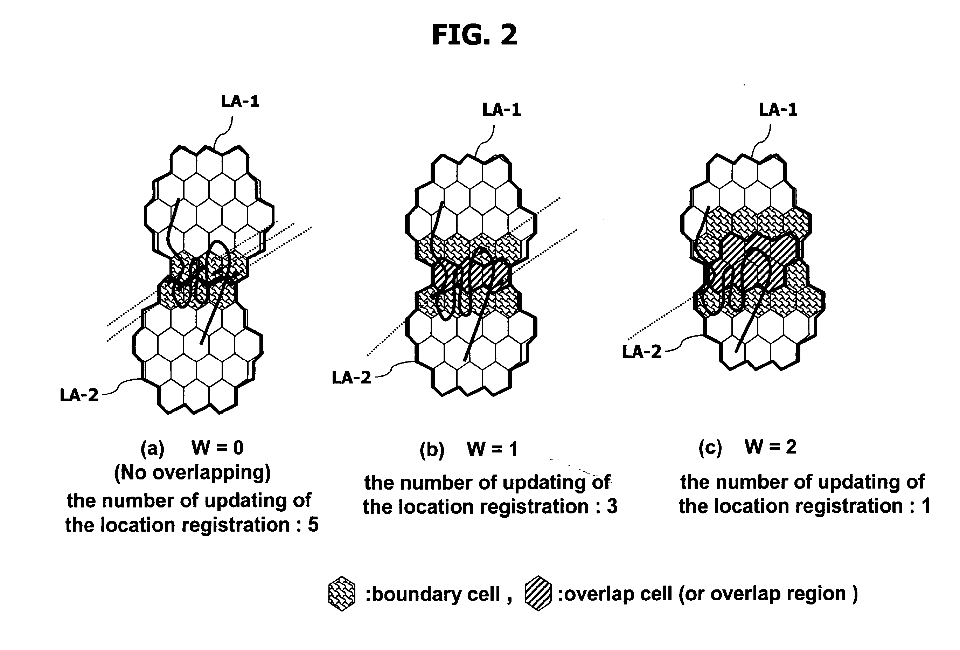

Fig. 2 illustrates the related art location registration method, showing a change in the number of times of updating of location registration according to an overlap index (W). Referring to Fig. 2, if adjacent clusters do not overlap (W=0), a mobile terminal updates a location registration of a mobile terminal whenever its cluster or a local area changes. In this example, W=0 corresponds to a group location registration method in which a location registration is updated five times.

If the adjacent clusters are overlapping, namely, overlapping cells of the adjacent clusters are one fold (W=1) or two fold (W=2), a location registration of the mobile terminal is updated upon movement of the mobile terminal outside a coverage radius of the overlapping cells. If the overlapping cells of the adjacent clusters are one fold, the location registration is updated three times. If the overlapping cells of the adjacent clusters are two fold, the location registration is updated one time and the traffic burden on boundary cells is reduced compared with that of overlapping cells of one fold adjacent clusters.

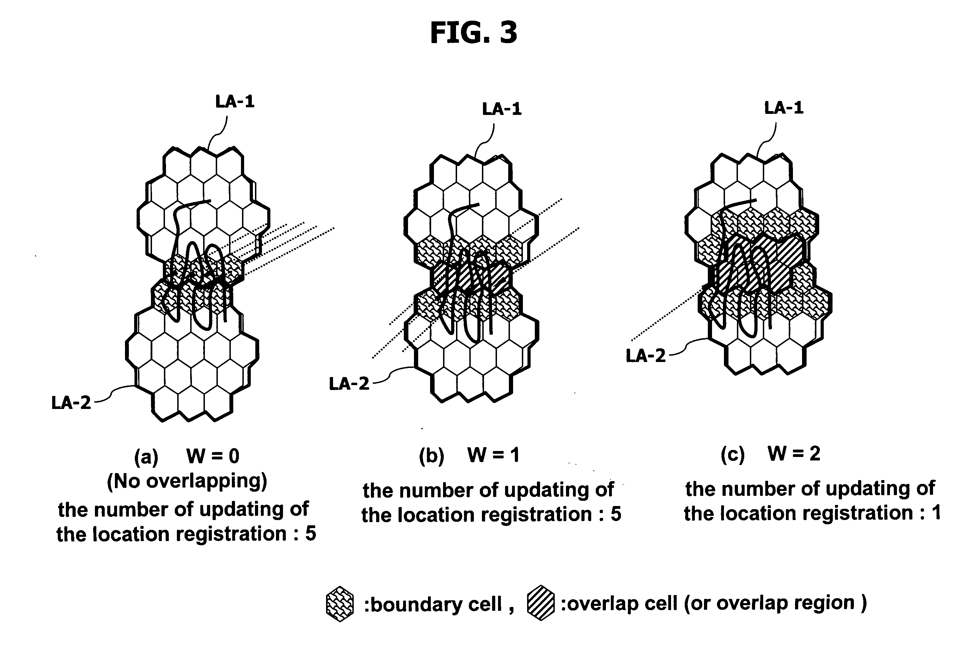

Figure 3 illustrates a change in the number of times that a location registration is updated according to the overlap index (W) when the mobile terminal has a larger movement radius. When the mobile terminal has a larger movement radius, the update rate changes for the location registration. In one example, a location registration of W=1 equals the number of times that a location registration of W=0 is updated. In the same example, when the overlapping cells of adjacent clusters are two fold, the location registration of a mobile terminal is updated only once. Using the conventional overlapping location registration method, a wider overlap area reduces traffic burden along boundary cells.

Overlapping location registration methods comprise clusters, which contain hexagonally shaped cells. If the clusters have an irregular shape, the overlapping location registration method is difficult to apply. Non-uniformly shaped overlapping clusters require more mobile switching centers resulting in increased mobile communication network operating costs.

Therefore, there is a need for a system that overcomes the above problems and provides advantages over convention location registration systems and methods.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

In one embodiment, a system comprises a mobile switching center for managing a location registration of the mobile terminal in a cluster group comprising a plurality of clusters, wherein each cluster of the plurality of the clusters has at least one cell defining an area for determining the location of the mobile terminal. A plurality of sub-mobile switching centers for managing the location registration of the mobile terminal, wherein each sub-mobile switching center is associated with at least one cluster. The mobile switching center is associated with a virtual cluster for managing the location registration of the mobile terminal. The virtual cluster is associated with an area where there are frequent location registrations of mobile terminals.

In another embodiment, a method comprises performing by a mobile switching center a location registration for a mobile terminal in a cluster group comprising clusters each having at least one cell defining an area for determining the location of the mobile terminal, and allocating at least one a sub-mobile system center to the clusters of the cluster group for managing the location registration of the clusters. The method further comprises managing information of a location registration of the mobile terminal in the cluster group utilizing the mobile switching center. The further comprises determining by the mobile switching center a virtual cluster associated with an area formed by overlapping cells of cluster groups, wherein the area is one of frequent mobile terminal registrations.

Additional features and advantages of the invention will be set forth in the description which follows, and in part will be apparent from the description, or may be learned by practice of the invention. It is to be understood that both the foregoing general description a nd the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

Features, elements, and aspects of the invention that are referenced by the same numerals in different figures represent the same, equivalent, or similar features, elements, or aspects in accordance with one or more embodiments.

Fig. 1 is a schematic illustrating the structure of a conventional mobile communication network.

Fig. 2 is a schematic illustrating of a first conventional overlapping location registration method.

Fig. 3 is a schematic illustrating a second conventional overlapping location registration method for mobile terminals.

Fig. 4 is a schematic illustrating a cluster group formed for monitoring location registration of mobile terminals in accordance with one embodiment of the present invention.

Fig. 5 is a schematic of a mobile communication network illustrating the location registration system of Fig. 4.

### DETAILED DESCRIPTION OF THE PREFERRED EMBODIMENTS

The invention relates to a system and method for a mobile communication network and, more particularly, to a location registration system.

Although the invention is illustrated with respect to a mobile terminal, it is contemplated that the invention may be utilized anywhere it is desired for transmitting, receiving, or processing signals. Reference will now be made in detail to the preferred embodiments of the present invention, examples of which are illustrated in the accompanying drawings.

The present invention provides a virtual cluster formed from overlapping cells and/or boundary cells of one or more clusters. A cell is an assigned area for monitoring and/or managing mobile terminals. A cluster is preferably a group of cells within an area for monitoring and/or managing mobile terminals. The virtual cluster is allocated to manage a location registration of mobile terminals in preferably a traffic congested area. The virtual cluster reduces mobile terminal traffic burden by monitoring mobile terminals in a traffic congested area. The present invention allocates, in one embodiment, one mobile switching center (MSC) per cluster group to reduce facility costs for monitoring of mobile terminals. Sub-mobile switching centers (sub-MSCs) manage and/or monitor, in place of more expensive MSCs, mobile terminals within clusters of cells within the cluster group.

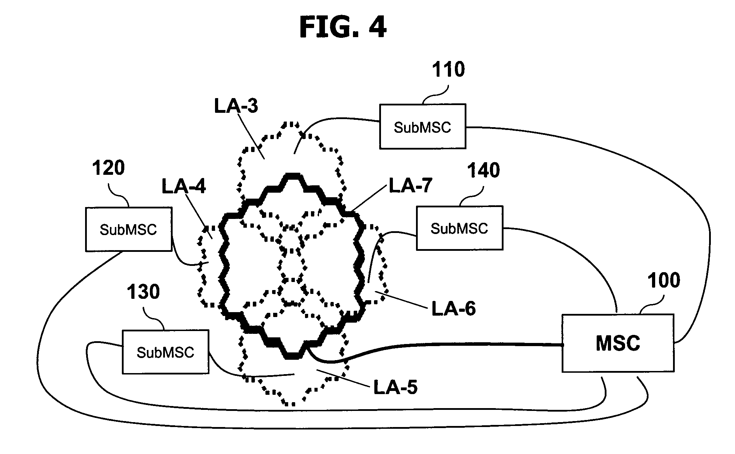

Fig. 4 is a schematic illustrating a cluster group formed for monitoring location registration of mobile terminals. In this system, neighboring clusters of cells are coupled to form clusters such as LA-3, LA-4, LA-5, and LA-6. Mobile terminals are assigned or allocated to the cells. A virtual cluster comprising cells, in this example LA-7, is located in an area of high traffic congestion of mobile terminals. LA-7 preferably comprises overlapping cells and boundary cells of neighboring clusters.

Sub-mobile switching centers ( Sub-MSCs) or supplementary u nits of MSCs, for example 110, 120, 130 and 140, are allocated respectively to mobile terminals positioned within areas LA-3, LA-4, LA-5, and LA-6. The sub-MSCs 100, 120, 130, and 140 manage, for example, mobile terminals that are positioned respectively in locations LA-3, LA-4, LA-5, and LA-6. Cells within LA-3, LA-4, LA-5 and LA-6 are allocated and positioned according to a location registration method. The location registration method, for example, may be an overlapping location registration method or a group location registration method.

Sub-MSCs perform and manage location registration of a mobile terminal using, for example, an interconnection network subsystem (INS). The INS handles a function of processing a centralized call, and a function of storing and managing information of a mobile subscriber. Sub-MSCs have a simple structure which may be easily implemented resulting in low mobile communication network installation costs.

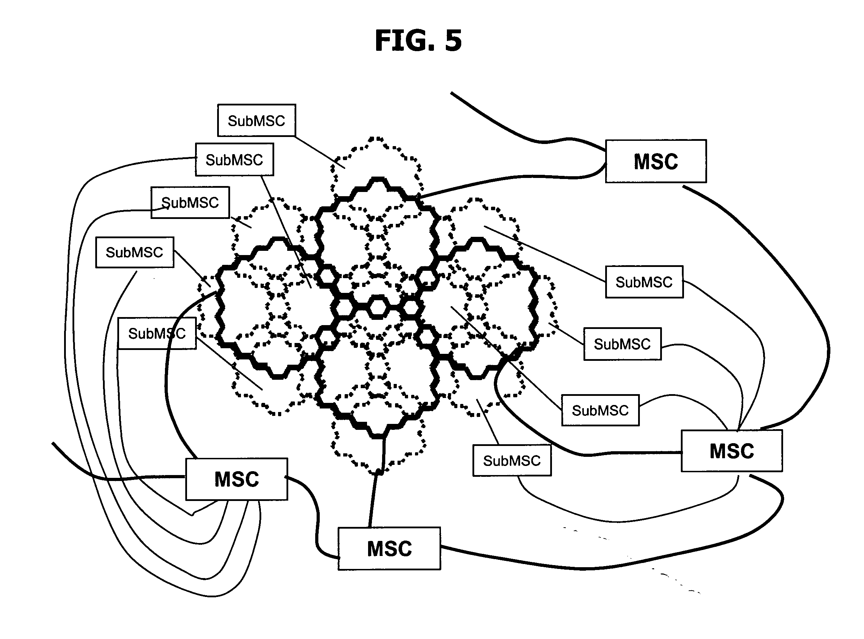

Fig. 5 is a schematic of a mobile communication network illustrating the location registration system of Fig. 4. Referring to Fig. 5, a mobile communication network comprises fifteen clusters. Four MSCs manage location registration of mobile terminals within the mobile communication network. The four MSCs manage location registration of mobile terminals within the four clusters. One MSC is allocated to each of the four virtual clusters. Each MSC includes, for example, four sub-MSCs. The four sub-MSCs manage mobile terminals within clusters of a corresponding cluster group.

The MSC manages location registration of mobile terminals in a virtual cluster of a cluster group that the MSC itself handles. The MSC collects and manages location registration information of mobile terminals from the sub-MSCs. In this example, one MSC manages mobile terminals within four clusters utilizing four sub-MSCs.

Although the present invention is described in the context of a mobile terminal, the present invention may also be used in any wired or wireless communication systems using mobile devices, such as PDAs and laptop computers equipped with wired and wireless communication capabilities. Moreover, the use of certain terms to describe the present invention should not limit the scope of the present invention to certain type of wireless communication system. T he present invention is also applicable to other wireless communication systems using different air interfaces and/or physical layers, for example, TDMA, COMA, FDMA, WCDMA, etc.

The preferred embodiments may be implemented as a method, system or article of manufacture using standard programming and/or engineering techniques to produce software, firmware, hardware, or any combination thereof. The term "article of manufacture" as used herein refers to code or logic implemented in hardware logic (e.g., an integrated circuit chip, Field Programmable Gate Array (FPGA), Application Specific Integrated Circuit (ASIC), etc.) or a computer readable medium (e.g., magnetic storage medium (e.g., hard disk drives, floppy disks, tape, etc.), optical storage (CD-ROMs, optical disks, etc.), volatile and non-volatile memory devices (e.g., EEPROMs, ROMs, PROMs, RAMs, DRAMs, SRAMs, firmware, programmable logic, etc.).

Code in the computer readable medium is accessed and executed by a processor. The code in which preferred embodiments are implemented may further be accessible through a transmission media or from a file server over a network. In such cases, the article of manufacture in which the code is implemented may comprise a transmission media, such as a network transmission line, wireless transmission media, signals propagating through space, radio waves, infrared signals, etc. Of course, those skilled in the art will recognize that many modifications may be made to this configuration without departing from the scope of the present invention, and that the article of manufacture may comprise any information bearing medium known in the art.

The foregoing embodiments and advantages are merely exemplary and are not to be construed as limiting the present invention. The present teaching can be readily applied to other types of systems. The description of the present invention is intended to be illustrative, and not to limit the scope of the claims. Many alternatives, modifications, and variations will be apparent to those skilled in the art. Accordingly, the invention is not limited to the precise embodiments described in detail hereinabove.

## Claims

1. A system for location registration of a mobile terminal in a mobile communication network, the system comprising:
a mobile switching center for managing a location registration of the mobile terminal in a cluster group comprising a plurality of clusters, wherein each cluster of the plurality of the clusters has at least one cell defining an area for determining the location of the mobile terminal; and
a plurality of sub-mobile switching centers for managing the location registration of the mobile terminal, wherein each sub-mobile switching center is associated with at least one cluster.

2. The system of claim 1, wherein the mobile switching center is associated with a virtual cluster for managing the location registration of the mobile terminal.

3. The system of claim 2, wherein the virtual cluster is associated with an area where there are frequent location registrations of mobile terminals.

4. The system of claim 1, wherein for defining a surrounding area for the virtual cluster comprising a mobile terminal frequent location registration area.

5. The system of claim 1, wherein the mobile switching center couples the plurality of the clusters into the cluster group.

6. The system of claim 1, wherein the mobile switching center is associated with a virtual cluster for an area of overlapping cells and boundary cells of multiple cluster groups where frequent location registration of mobile terminals.

7. The system of claim 1, wherein the mobile switching center collects and manages information associated with the location registration of the mobile terminal.

8. The system of claim 1, wherein the mobile switching center is associated with a virtual cluster and manages the location registration of the mobile terminal in the virtual cluster.

9. The system of claim 8, wherein the virtual cluster comprises an area having the overlapping cells and the boundary cells from multiple cluster groups having frequent mobile terminal registrations.

10. The system of claim 1, wherein the cluster group comprises one virtual cluster and four general clusters.

11. The system of claim 1, wherein the plurality of the clusters are positioned in accordance with an overlapping location registration method.

12. The system of claim 1, wherein the plurality of the clusters are positioned in accordance with a group location registration method.

13. A method for location registration of a mobile terminal within a mobile communication network, the method comprising:
performing by a mobile switching center a location registration for a mobile terminal in a cluster group comprising clusters each having at least one cell defining an area for determining the location of the mobile terminal; and
allocating at least one a sub-mobile system center to the clusters of the cluster group for managing the location registration of the clusters.

14. The method of claim 13, further comprising:
managing information of the location registration of the mobile terminal in the cluster group utilizing the mobile switching center.

15. The method of claim 13, further comprising:
determining by the mobile switching center a virtual cluster associated with an area formed by overlapping cells of cluster groups, wherein the area is one of frequent mobile terminal registrations.

16. The method of claim 13, further comprising:
determining by the mobile switching center a virtual cluster comprising boundary cells of the clusters.

17. The method of claim 14, further comprising:
determining by the mobile switching center the location registration associated with a virtual cluster, wherein the virtual cluster is an area of frequent location registrations of mobile terminals.

18. The method of claim 13, further comprising:
allocating the mobile switching center and the plurality of sub-mobile switching centers for monitoring the mobile terminal in a virtual cluster and each cluster of the cluster group.

19. The method of claim 13, further comprising:
operating the mobile switching center and the at least one sub-mobile switching center to process information generated from the location registration for the mobile terminal for each cluster of the cluster group.

20. The method of claim 13, further comprising:
transmitting the location registration to the mobile switching center; and
managing the location registration utilizing the mobile switching center.

21. The method of claim 13, further comprising:
registering by the mobile switching center the mobile terminal having frequent occurrence of at least one of the location registration, the location registration, and a location registration,
wherein the mobile terminal is positioned in at least one of overlapping cells and boundary cells of the cluster groups having frequent mobile terminal registrations.
